(19) Europäisches Patentamt
European Patent Office
Office européen des brevets

(11) EP 1 160 733 A1

(12) **EUROPEAN PATENT APPLICATION**

(43) Date of publication:
05.12.2001 Bulletin 2001/49

(51) Int Cl.⁷: **G06T 17/40**

(21) Application number: 00650060.7

(22) Date of filing: 29.05.2000

(84) Designated Contracting States:
AT BE CH CY DE DK ES FI FR GB GR IE IT LI LU MC NL PT SE
Designated Extension States:
AL LT LV MK RO SI

(71) Applicants:
• assyst GmbH
85551 Kirchheim (DE)
• Assysoft GmbH
85551 Kircheim bei München (DE)

(72) Inventors:
• Vogel, Ute
41352 Korschenbroich (DE)

• Lesske, Frank
83607 Holzkirchen (DE)
• Stephens, Patrick
Knocklyon, Dublin (IE)
• Weisser, Elisabeth
80339 München (DE)

(74) Representative: Hanna, Peter William Derek et al
Tomkins & Co.,
5 Dartmouth Road
Dublin 6 (IE)

(54) **Garment pattern processing system and method**

(57) The invention relates to an improved garment pattern system and manufacturing method. The invention allows for the definition of individual garment elements, and the assigning of constraints, and measurement tables to the elements. Individual elements to form pattern pieces and/ or groups may then be subsequently processed using the defined constrained elements to form processed garment specifications. The invention may also allow for the creation of templates for the tables, the templates defining the relationship between the individual sizes within the measurement tables.

Fig. 1

EP 1 160 733 A1

### Description

### Field of the invention

The invention relates to garment patterns, and more specifically to their construction and use in an industrial production environment.

### Background to the Invention

Traditionally the manufacture of garment patterns was performed using drawing instruments (such as ruler and compasses) on a sheet of paper. In many cases this process was wholly intuitive, but there also existed attempts to document construction descriptions in order to make methods clearer and pass on techniques and methodologies to those not specifically involved in the original design process. These attempts suffer in that as one proceeds beyond a basic level of foundation, the subject turned out to be too complex for creating generally valid guidelines, especially because most pattern makers see themselves as artists who cannot be restricted by guidelines. Typically, therefore, the basic frame of new patterns was developed on the basis of construction descriptions, the fashionable design and the achievement of a good fit was done according to individual methods on an empirical basis. This process had to be carried out individually for each customer to model the specific measurements of the garment.

One of the initial problems encountered from the beginning of industrial clothes production was how to produce different predefined sizes of a pattern, without the lime-consuming need to develop a new pattern for each size. A process along the lines of x/y-grading was introduced. This involves the attachment or linking of x/y-co-ordinate transformation rules to individual points of a pattern, describing a shift in two dimensions. The basic size pattern was still developed in the traditional way. The basic frame resulting from shifting points is then complemented with lines and curves, measured, adjusted and completed to result in a new pattern. When computer based systems were introduced into garment manufacturing, computer aided design or CAD systems were developed which support this traditional way of pattern making and grading.

More recently, development work has reverted to some extent to the construction-based way of manual pattern making and research and documentation has started in this field, (HAKA Schnittkonstruktionen, Rundschau Verlag, Otto Königer GmbH & Co., München, Mosinski, Pohl : Grundlagen der Bekleidungskonstruktion, System Optikon, Institut für Textil- und Bekleidungswesen 1991; Bekleidungsphysiologisches Institut Hohenstein: Band 51-Konstruktionsgrundlagen für Damen- und Mädchenbekleidung). In this type of approach a pattern is described by a sequence of construction steps where each step may be parameterized by a measurement value. Thus, executing the same construction process several times and using size-specific measurement values each time can produce the various sizes of one single pattern. This process is acknowledged as a better way of pattern making, because it is more precise and reproducible, while making it easy to produce different variations of one pattern by just changing measurement values. But at the same time it proved again that it is very difficult to define a complete pattern description that is consistent and correct for all possible sets of measurements. Specifically the last steps for the fine adjustment of seam lengths and shaping curvatures require a multiplicity of parameters to be taken into account, so that it is hard to build rules and is easier to let the pattern maker decide this intuitively. That is why published construction descriptions are limited to basic patterns. These still miss fashion dependent styling details, or have not the final flow of stitch lines and therefore are not on their own suitable for garment production.

During the same period, some computer-based systems ( such as GRAFIS, as developed by Grafis-software) developed by Grafis)for supporting these construction-based pattern-making methods have been developed. They record the sequence of construction steps carried out by the user and allow for cross-references to tables when the specification of values is required. The construction steps can either be recorded using an interactive graphic user interface, or via a programming interface. The cross-references are built via variables. These are found hard to understand in the context of a pattern construction, because their relationship to the piece elements is not visible, and it is therefore quite difficult to create different variations to a basic pattern Subsequent modifications of the record pattern are not feasible, since every construction step highly depends on prior steps. Simple changes or alterations to a value could have unforeseeable effects. As a result, the basic pattern definitions are either not accessible to the normal user of the system, or are so complex that an average user cannot modify them. Also, a user can not define different alternatives for styling details within the same construction description. This results in the problem that to create a variation of an existing construction, the whole step sequence has to be rebuilt.,

A further example of attempts to automate the garment manufacture industry is described in US- 4916624 which relates to " Computerized system for prealteration of garment pattern data". This describes a system for adopting an existing pattern and on the basis of the known pattern identifying garment features such landmarks, then after grading applying a set of predefined operations on this landmark; thereby effecting an alteration system based on a knowledge base as opposed to a system for the complete process of garment manufacture.

The problems associated with the prior art methods are serious problems.. Specifically in the garment industry the unique style of pattern making, constantly adapted to the current fashion, is an important competitive factor that cannot be borrowed as standard solution. It is important to be able to produce variations of an existing model within a short time. Such variations might be mere modifications of values (e.g. change of ease factors), slight modification of construction steps or the exchange of pattern pieces or parts of pieces between different patterns. This is becoming an increasingly critical issue in modern production environments of the garment industry. New challenges require shortening and simplifying the pattern development cycle as much as possible. For example, mass-customisation requires that patterns can be easily adapted to individual body measurements. Also, with a world wide net of production sites, where garment manufactures may switch from one production site to another depending on their current production costs, it will be required that pattern can be easily adapted to different kind of manufacturing equipment.

### Object of the Invention

Accordingly an object of the present invention is to provide an efficient technique and computer system for constructive preparations of garment patterns supporting a parametric and variational design approach.

### Summary of the invention

Accordingly the invention provides a system, method, database and computer program substantially as detailed in the appended claims.

In a preferred embodiment the invention provides a system and method that gathers the construction description for pattern data as a number of geometric constraints (like length of a line, distance between two geometric elements, angle between two lines, etc.) on the elements forming the pattern pieces. The assignation is done with graphical means by pointing with a cursor or similar electronic tool on the referring element. The order in that the constraints are defined has no influence on the resulting geometry, the constraints are processed simultaneously when the shape of a pattern piece is calculated. This simulation or technique approximates the pattern makers perception of the pattern as a whole showing certain proportions.

Modifications of existing patterns can be done by graphical means working on the referring area of a pattern piece, without the need to take any kind of sequential construction description of the whole pattern into account. This allows a user to easily create different modifications of a piece by modifying such a piece specification subsequently (e.g. by changing the constraint values) or by reusing such a piece specification when copying elements together with the referring constraints and pasting them into a different piece specification. All constraint values can be subject to tolerances, which allows the user to build patterns upon uncertain knowledge. The system creates a pattern piece geometry by calculating the correct positions of the geometric elements when solving all constraints simultaneously. If there are no inconsistencies the system finds a "best" solution that satisfies all constraints. If there are inconsistencies the system may be adapted to illustrate or outline what these are.

The invention may also provide a method of generating a generic pattern description for the pattern pieces of a garment or the like, comprising the steps of:

entering sketches of the elements of the pieces of the garment into a computer datastore by using graphical drawing means,
optionally identifying each element by name,
defining geometric constraints for any element or group of elements,
identifying constraint values for each constraint based on formulas that refer to variables (variables for body measurements, ease, shrinkage, stretch, pattern styling, etc.), and
optionally defining a tolerance range for each constraint value.

The invention may also provide a method for creating modular pattern descriptions by allowing the user to create and store subsets of generic pattern descriptions and recombining them to new patterns, and while doing so assuring the consistency of the pattern.

The method for creating modular pattern data may comprise the steps of:

assigning subsets of elements to pattern pieces in the course of which one element can be assigned to only one piece,
assigning subsets of elements to groups in the course of which one element can be assigned to several groups and the elements of one group can belong to several pattern pieces,
selecting the elements belonging to a single pattern description by activating or deactivating single pattern pieces and element groups and then taking the resulting intersecting element set,

automatically deactivating constraints not needed for the resulting pattern description, and
automatically checking the resulting pattern description for consistency.

The invention may also provide a method of generating generic or global templates and tables for pattern size ranges, comprising the steps of:

defining how a basic pattern size is to be modified for the other required sizes, and
specifying a value for the basic size in a table, whereupon the values for the other required sizes are calculated.

The invention may provide a method for adapting global templates and tables to define local templates and tables for application to a specific generic pattern description, comprising the steps of:

choosing a suitable global template for application to a generic pattern description,
defining how the value of the basic size in the global template is to be modified for the other required sizes of this specific generic pattern description,
specifying a deviating value for the basic size in the table,
specifying a value for any size in a table by defining relationships between values of different variables of the same size
processing the values for the other required sizes of this specific generic pattern description, and
storing the local template and table related to the specific generic pattern description

The invention may also provide a method of generating the geometric shape of the pattern pieces of a garment or the like in any specified size, comprising the steps of:

defining a generic pattern description for the required pattern piece
for each pattern piece, generating a graphic image record for each desired size by evaluating the generic pattern description taking values from associated table data, and optionally including the additional step of
calculating status information on the evaluation process.

The associated table data for the graphic elements may be formed by user input values, the importation of existing values from alternative sources, the calculation of related value using template relationships or a combination of the aforementioned.

Although the invention has been described with reference to specific embodiments and examples it will be appreciated by those skilled in the art that the method and apparatus of the invention may be applied to any situation in which a wide variety of sizes, fittings or the like are required to be generated for articles of a common basic style.

A method and system for constructive preparation of garment patterns embodying the invention will now be described in greater detail by way of example, with reference to the drawings, in which:

**Brief Description of the Drawings**

Figure 1 shows the overall system process with the general flow of data and user interaction in accordance with the present invention;
Figure 1A shows the process of defining the pattern knowledge base;
Figure 1B shows the process of defining measurement tables;
Figure 1C shows the process of defining a variable pattern specification;
Figure 1D shows the process flow for defining a pattern specification;
Figure 2 shows an initial sketch of graphic elements forming a pattern piece of a skirt (which is not accurate enough for a pattern design);
Figure 3 shows the defining of constraints and dimensions on the graphic elements of Figure 2, thereby providing geometric elements for the front panel of the skirt of Figure 2;
Figure 4 shows the specifying of constraint values using measurement identifiers and formulas on the skirt of Figure 3;
Figure 5 shows an example of multiple pieces as part of one generic pattern description;
Figures 6A - 6G show several examples of multiple element groups as part of one generic pattern description;
Figure 7 shows a sketch with defined associated constraints
Figure 8 shows the pattern specification of Figure 7 with the constraints assigned in Figure 7 solved, and

Figure 9 shows an overview of defining pattern specifications from a generic pattern description.

## Detailed Description of the Drawings

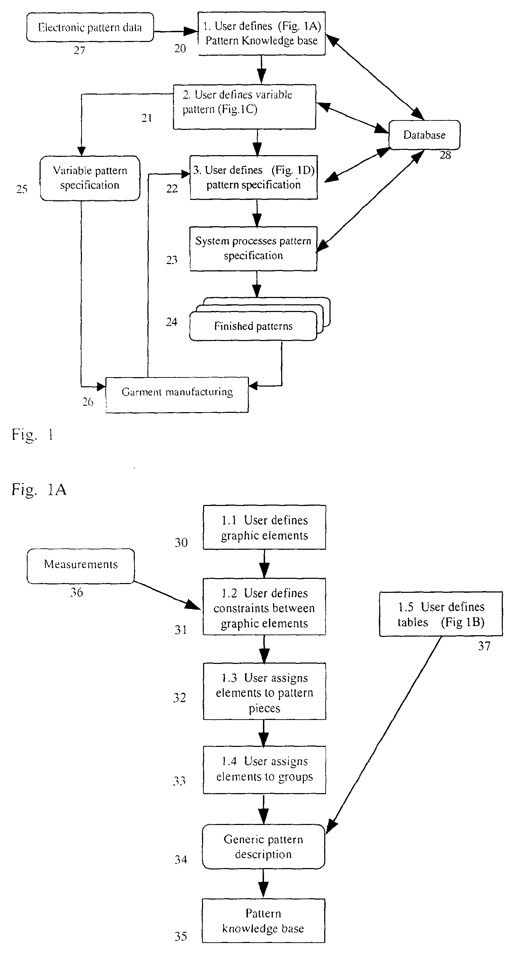

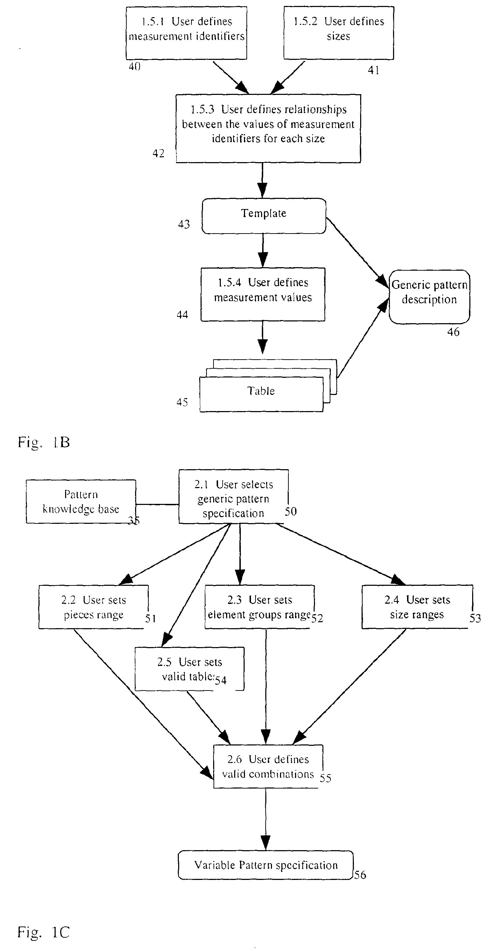

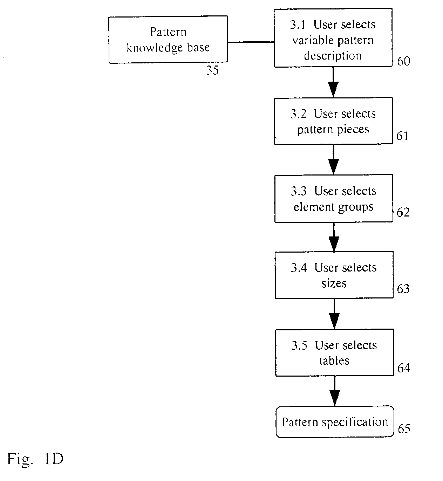

The general operation of the system is shown in Fig. 1 and consists of 4 main steps, steps 1 to 4 (blocks 20 to 23). Where cross references to other figures are required these are detailed in the specific blocks. The system is adapted to enable a user to define three distinct types or levels of patterns:

- the pattern type: a generic and very general description that allows to produce different kind of patterns with different kind of details, size ranges, etc.
- the variable pattern: already more detailed than the pattern type, but still generic, allows to produce one kind of pattern with different variations.
- the pattern: not generic, the final description of the pieces of the garment

At step 1 (block 20), the user creates a pattern knowledge base, which comprises generic descriptions of all the patterns on which the pattern makers work. At step 2 (block 21), the user defines a variable pattern specification.
As discussed above the variable pattern is an intermediate layer between a pattern type and a pattern. A pattern type is the generic description that allows a user to instantiate several kinds of patterns. A pattern itself is the final shape for creating garments. A variable pattern is like a pattern but still allows for some flexibility or variations in the final output pattern. It differs from a pattern type, in that a variable pattern is in a condition to be passed to production, and that then during production the final pattern (based on the variable pattern) may be determined. This allows to take modern production flows into consideration.
The output of 1c is a variable pattern. This has still some degrees of freedom for creating the final pattern (as described above). Against that, the output of 1d) which is illustrated at step 3 (block 22), is a generated defined pattern specification, which may then be processed, as shown in Step 4 ( block 23). For this processing step the system solves, for each piece of the pattern and each specified size the dimensional description of that piece.
The result of these steps is the generation of a set of pattern pieces, as indicated at block 23; and from these, garment manufacturing can be performed, as indicated at block 24.
Typical inputs into the final decisions to determine the final pattern from a variable pattern specification may include:

- In the shop the customer decides about a styling detail (e.g. which pocket, which neckhole, etc.). In that case, the variable pattern has to offer a choice of 'valid' styling details.
- The final pattern is created based on body measurements for an individual customer. In that case the variable pattern has to offer the choice to enter measurement values. That might require to check if the values are within a given range, since not for all value combinations the pattern specification might produce a meaningful pattern.
- The final pattern is typically manufactured at certain geographic production sites (e.g. at a plant in Mexico, or Turkey, or India). This site has certain equipment that puts 'constraints' on the pattern , as e.g. the need for a specific seam allowance. In that case the variable pattern has to offer a choice of valid tables (e.g. according to seam), the plant can choose from, when calculating the final pattern.

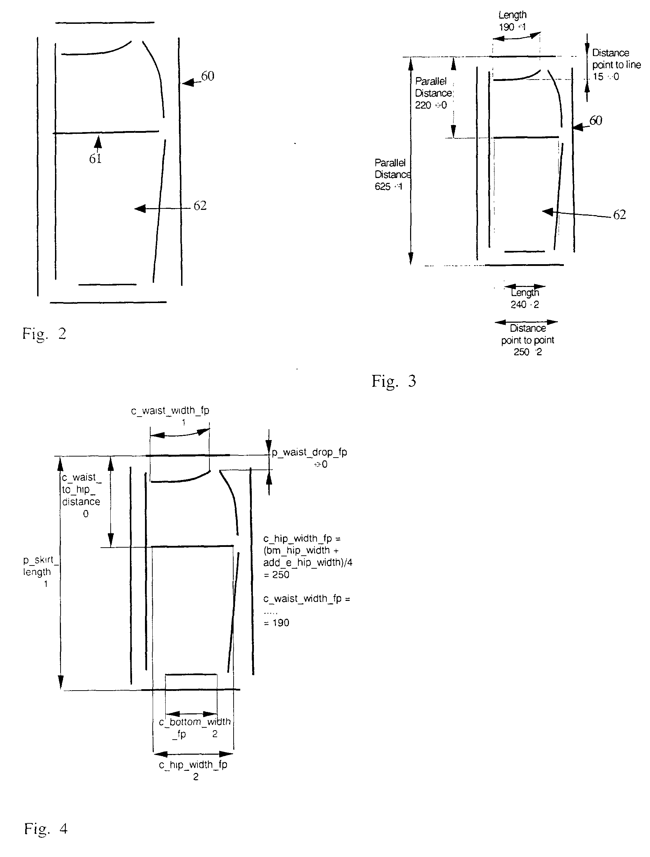

The degree of flexibility allowed in modifying the variable pattern so as to form a finished pattern is typically controllable; typically a user will be allowed to choose from a list of pieces, to allow to choose from groups of elements, to allow to choose from measurement tables, to allow to assign different size ranges. In theory the pattern makers should check all possible combinations before releasing the pattern for production, to make sure that the end result is always a meaningful pattern. This implies that for the variable pattern definition means are given to the pattern makers to exclude 'invalid' combinations.
In step 1 (block 20), the system requires information for developing the pattern knowledge base. This information can be taken from electronic pattern data (as e.g. pattern data from other CAD systems), as indicated by block 27, or can be derived from the pattern maker's experience. The pattern knowledge base, the pattern specifications, and the processed pattern specifications are stored in a general system database, as indicated at block 28, which is suitably coupled to, and accessible from, blocks 20, 21, 22 and 23.
Fig. 1A details the process of defining a pattern knowledge base. This consists of four main user steps, steps 1.1 to 1.4 (blocks 30 to 33), which generate dimensional descriptions of elements which together form a generic pattern description (block 34), and are added to the pattern knowledge base (block 35).
At step 1.1 (block 30), the user defines the graphic elements of the pattern by drawing an initial sketch. The sketch is typically a rough outline of the final shape of the graphic element. For creating such a sketch drawing tools are available that allow the user to enter geometric elements ( e.g. inside leg, outside leg, girth etc.) and geometric constraints ( the relationship of the inside leg to the outside leg etc.) in an electronic graphic environment, and the system may include predefined shapes such as points, lines, arcs, circles etc., to assist the user in this initial preparation. Such sketches can also be imported from existing pattern data previously stored in electronic format. Fig. 2 shows an example of such a graphic sketch drawing for a skirt front panel pattern piece. As shown, this consists of a rectangular frame 60 with a horizontal divider 61, and the actual piece shape 62, which fits within the frame 60.

Using this sketch, at step 1.2 (block 31) the user can define the features of a graphic element or the intended relationships between two or more graphic elements by attaching geometric constraints on them. These constraints define the dimensions of the graphic elements (such as length of a line, distance between two lines, distance between point and a line, angle between two lines, etc.) and their geometric relations (such as two lines are parallel, two points coincide, two points are symmetric with respect to a symmetry line, etc.). Fig. 3 depicts how, in the skirt example of Fig. 2, some constraints are defined.

The values of the constraints, e.g. the value for the length of a line can be a numerical value or can relate to a measurement or even a formula or function of several measurements. All constraint values can be subject to tolerances, which allows the user to build patterns upon uncertain knowledge or variances.

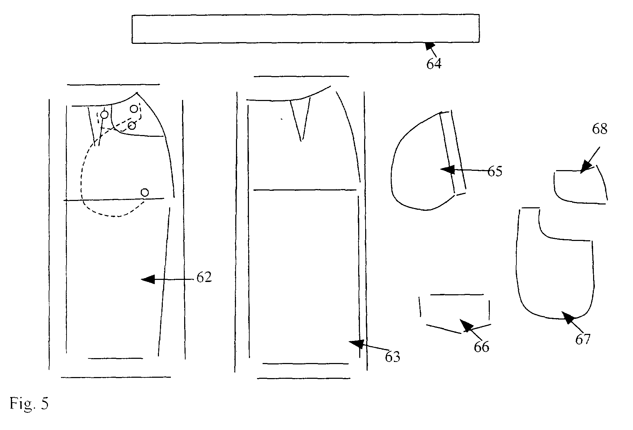

Fig. 4 shows how the constraints in the example of a skirt can be dependent on measurements or formulas. The vertical length of the piece has been changed from the numerical value of Fig. 3 to a measurement p_skirt_length (parameter skirt length). Also, the width has been changed to a formula c_hip_width_fp (calculated hip width, front panel), which is defined as

$$c\_hip\_width\_fp = (bm\_hip\_width + add\_e\_hip\_width)/4$$

where bm_hip_width is the body measurement hip width and add_e_hip_width is the addition of ease for hip width. By ease is meant the slack distance between the body and the intended garment. This formula means, that the hip width in the front panel is defined to be a quarter of the hip of the intended body, including an additional ease value.

At step 1.3 (Block 32) the user assigns the graphical elements to pattern pieces. Fig. 5 shows an example of a multiple dimensional piece description for a skirt with several variations, containing the front panel piece 62, the back panel piece 63, a waist band piece 64 together with 3 variations of pockets, a flap pocket piece 65, a welt pocket piece 66 and a side pocket piece 67 with the related yoke piece 68. It will be appreciated that these illustrations are examples of the technique in that there will be four main pieces, left and right front panel pieces and left and right back panel pieces. The left and right front panel pieces are matching, so only one of them need be defined.

Some pattern pieces include information belonging to more than one variation as can be seen in the front panel piece 62. It contains elements for an optional dart, the alternative contour of the front panel needed for the side pocket and position marks for the well and flap pocket.

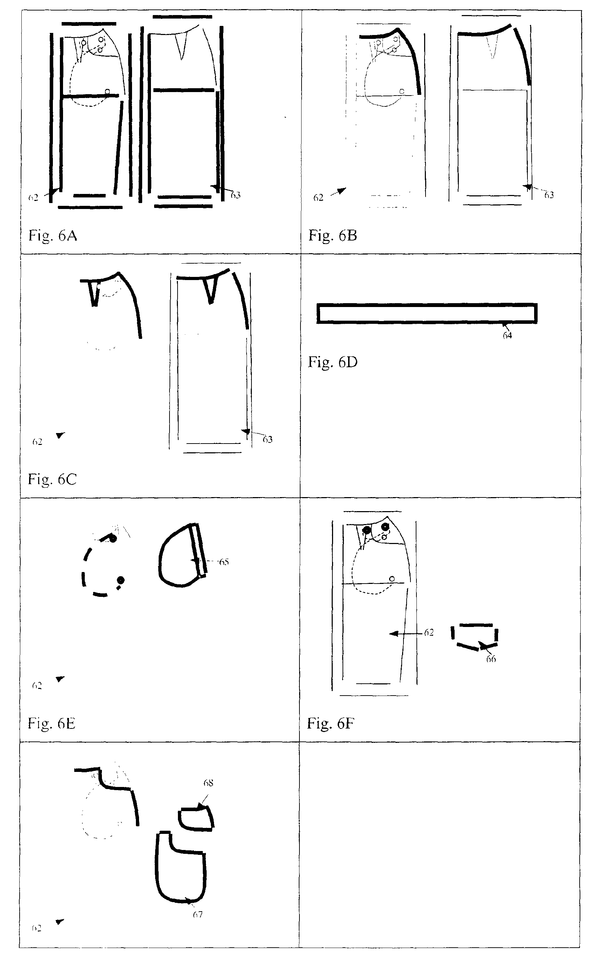

At step 1.4 (Block 33) the user assigns the graphical elements needed for a variation to groups. Single elements can be assigned to several groups, the elements of one group can belong to several pattern pieces. Figs. 6A - 6G show some examples for such groups. The elements belonging to the referring group are displayed as thicker lines. Fig. 6A shows a group containing the elements needed for the basic frame of front and back panel, Fig. 6B shows a group containing the elements needed for a waist area without dart. Fig. 6C shows a group containing the elements needed for a waist area with one dart in each front and back panel. Fig. 6D shows an element group needed for a waistband, Fig. 6E shows an element group needed for a welt pocket. Fig. 6F shows an element group needed for a flap pocket. Fig. 6G shows an element group needed for a side pocket.

Measurement tables define the values of measurements related to a set of sizes. Different types of measurement tables are created by grouping sets of measurements according to their function within a pattern, as for instance body measurements, ease, and styling details for different parts of the pattern. At step 1.5 (Fig. 1A) the user creates a table for a generic pattern description. Fig. 1B illustrates this process. Tables are based on templates that define the relationships between a table's values.

Example of the construction of Tables of Measurements

Two entities, templates and tables, are created which combine to provide a set of related tables of measurements for application to the evaluation of a pattern.

A template contains one or more sets of sizes, a set of measurement identifiers, and value information for each measurement identifier. For each measurement identifier, the value information is either a set of expressions or a set of numeric "delta" values. When the value information is a set of expressions, then for each size, an expression is specified from which a value for the measurement identifier can be derived, given the context of a pattern. When the value information is a set of delta values, then for each size, a numeric value is specified which represents an offset between the values for each pair of sizes.

A table is derivable from a template. Each table contains one or more reference sizes (which must be contained in the sets of sizes in the template), plus reference size values for each of the measurement identifiers in the template whose value information is expressed using delta values.

Many tables can be derived from a single template by using different reference sizes and/or different values for the measurement identifiers in the reference size.

Tables and templates are combined to provide a highly flexible and customizable way of creating sets of measurement values in a range of sizes.

Table 1 shows a template containing two sets of sizes and four measurement identifiers. The value information for the first two measurement identifiers is defined in terms of numeric delta values, e.g. the difference between Size1 and Size2 for measurement meas1 is 2 units. The value for the last two measurement identifiers is defined using expressions.

|  | size1 | size2 | size3 | size4 | size5 |
|---|---|---|---|---|---|
|  | sizeA | sizeB | sizeC | sizeD | sizeE |
| meas1 |  | 2 | 3 | 4 | 5 |  |
| meas2 |  | 1 | 2 | 2 | 1 |  |
| meas3 | meas1 / 2 | meas1 + 10 | meas1 + 10 | 20 | 20 |
| meas4 | meas3 + 1 | meas3 + 2 | meas3 + 3 | meast3 + 2 | meas3 + 1 |

Table 1

Tables 2 and 3 below are examples of tables derived from this template. Table 2 defines two reference sizes. Table 3 defines a single reference size. Both tables define reference-size values for the measurements which are defined in the template using delta values.

Table 2

|  | size4 |
|---|---|
|  | sizeD |
| meas1 | 90 |
| meas2 | 10 |

Table 3

|  | size3 |
|---|---|
| meas1 | 65 |
| meas2 | 14 |

Table 4 illustrates the effect of combining the template from Table 2 with the table in Table 3. A value is calculated for measurement "meas1" in SizeC by taking the reference size value 90 (i.e. the SizeD value in the table), and subtracting the delta value 4 between SizeC and SizeD (in the template), giving the result 86. Similarly, a value is calculated for "meas1" in SizeB by subtracting the sum of the deltas between SizeB and sizeD, i.e. 3+4=7, from the reference size value 90 to give the result 83. A value is calculated for measurement "meas3" in SizeA by dividing the value of meas1 in SizeA by 2 to give the result 81.

|  | size1 | size2 | size3 | size4 | size5 |
|---|---|---|---|---|---|
|  | sizeA | sizeB | sizeC | sizeD | sizeE |
| meas1 | 81 | 83 | 86 | 90 | 95 |
| meas2 | 5 | 6 | 8 | 10 | 11 |
| meas3 | 40.5 | 93 | 96 | 20 | 20 |

| meas4 | 83 | 95 | 99 | 22 | 21 |
|---|---|---|---|---|---|

Table 4

Table 5 illustrates the effect of combining the template from Table 1 with the table in Table 3.

| | size1 | size2 | size3 | size4 | size5 |
|---|---|---|---|---|---|
| meas1 | 60 | 62 | 65 | 69 | 74 |
| meas2 | 11 | 12 | 14 | 16 | 17 |
| meas3 | 30 | 72 | 75 | 20 | 20 |
| meas4 | 31 | 74 | 78 | 22 | 21 |

**Table 5**

Thus it will be apparent that by combining value information from a template and a related table, a set of measurement values can be calculated in a range of sizes, for input to a constraint solving process.

The first elaboration of this basic template/table concept is when they are applied to patterns. The value information contained in one template can reference value information in another template. As such it may only be possible to calculate the value for a measurement in one template/table pair by reference to a different measurement in another template/table pair. Such a reference is made in the context of a pattern. Multiple template/table pairs can be applied to a pattern. There can be no duplication of measurements in the set of template/table pairs applied to a pattern, that is, it is not possible to have value information for a specific measurement in more than one of the template/table pairs applied to a pattern. This allows the value information for one template/table pair to unambiguously reference another.

To illustrate this, we add to the previously mentioned examples, the template in Table 6 and the associated tables in Tables 7 and 8.

| | sizeA | sizeB | sizeC | sizeD | sizeE |
|---|---|---|---|---|---|
| meas8 | | 2 | 2 | 2 | 2 | |
| meas9 | meas2+5 | | | | |

Table 6

Table 7

| | sizeC |
|---|---|
| meas8 | 50 |

Table 8

| | sizeC |
|---|---|
| meas8 | 60 |

In order to calculate a value for 'meas9' for any size in a template/table pair made up from these tables, it is necessary to find a value for measurement 'meas2'. This can only come from reference to another template/table pair. To determine which template/table pair to use to get a value for 'meas2' requires the context of a pattern, to which a set of different template/table pairs has been applied.

If for example, the template/table pairs in Table 4 and Table 7 are applied to a pattern, then it is possible to calculate the values for meas9, as shown in Table 9.

|        | sizeA | sizeB | sizeC | sizeD | sizeE |
|--------|-------|-------|-------|-------|-------|
| meas8  | 46    | 48    | 50    | 52    | 54    |
| meas9  | 11    | 12    | 14    | 16    | 17    |

Table 9

A further elaboration of the template/table concept, is what is termed "dependent local templates/tables". This is where a template/table pair is applied to a pattern, but some of the value information for measurement identifiers in this template/table pair is not correct for the pattern. It is possible to create additional information which is specific only to the pattern.

If for example, the template/table pair in Table 9 was applied to a pattern, but the value information for meas8 was not appropriate, a dependent local template and a dependent local table can be created for the pattern as shown in Tables 10 and 11.

|        | sizeA | sizeB | sizeC | sizeD | sizeE |
|--------|-------|-------|-------|-------|-------|
| meas8  |       | 3     | 3     | 3     | 3     |

Table 10

Table 11

|        | sizeC |
|--------|-------|
| meas8  | 54    |

The information in the dependent local template and a dependent local table override the corresponding information in the main template/table pair, resulting in the template/table pair shown in Table 12. Comparing this template/table pair with that in Table 9, it can be seen that the value information for 'meas8' differs but that for 'meas9' is unchanged, because it is not overridden by any information in the dependent local template and a dependent local table of the pattern.

|        | sizeA | sizeB | sizeC | sizeD | sizeE |
|--------|-------|-------|-------|-------|-------|
| meas8  | 48    | 51    | 54    | 57    | 60    |
| meas9  | 11    | 12    | 14    | 16    | 17    |

Table 12

Using the examples of the construction of tables and templates the generation of specific template/table combinations will now be described. At step 1.5.1 (block 40) the user defines a set of measurement identifiers or indices. The user also defines a set of sizes that may be used in the grament manufacturing process at step 1.5.2 (block 41). At step 1.5.3 (block 42) the user can set up a template. They can either define the relationships for one single measurement identifier between the values of the sizes, or the relationships between several measurement identifiers of the same size within one template. Alternatively they can define relationships between several measurement identifiers of the same size in different templates.

Table 13 below is an example of measurement template.

| Template: body measurements women | 36 | 38 | 40 | 42 | 44 | |
|---|---|---|---|---|---|---|
| bm_waist_to_knee | -2.00 | -1.00 | 0.00 | +1.00 | +2.00 | 65 |
| bm_waist_to_hip | 0.00 | 0.00 | 0.00 | 0.00 | 0.00 | |
| bm_waist_girth | -80.00 | -40.00 | 0.00 | +40.00 | +80.00 | |
| bm_hip_girth | -60.00 | -30.00 | 0.00 | +30.00 | +60.00 | |

| Template: ease women | 36 | 38 | 40 | 42 | 44 | |
|---|---|---|---|---|---|---|
| add_e_hip_girth | | | % of bm_hip_girth | | | 66 |
| add_e_waist_girth | | | % of bm_waist_girth | | | |

| Template: styling women | 36 | 38 | 40 | 42 | 44 | |
|---|---|---|---|---|---|---|
| p_waistband_width | 0.00 | 0.00 | 0.00 | 0.00 | 0.00 | 67 |
| p_skirt_length | -20.00 | -10.00 | 0.00 | +10.00 | +20.00 | |
| p_seam_extension | +10.00 | +5.00 | 0.00 | -5.00 | -10.00 | |

| Template: pocket styling women | 36 | 38 | 40 | 42 | 44 | |
|---|---|---|---|---|---|---|
| p_pocket_width | 0.00 | 0.00 | 0.00 | 0.00 | 0.00 | 68 |
| p_pocket_length | 0.00 | 0.00 | 0.00 | +10.00 | +10.00 | |
| p_pocket_angle | 0.00 | 0.00 | 0.00 | 0.00 | 0.00 | |

Table 13

This shows four templates, all for the generic pattern SKIRT, and may be termed global or generic templates Each template defines the variation of certain measurements with size; the basic size is size 40, with two steps on either side (36 and 38, 42 and 44, German women sizes). Template 65 is for four body measurements. bm_waist_to_knee, bm_waist_to_hip, bm_waist_girth, and bm_hip_girth; the entries define the increments between the values of the adjacent sizes. (-2, -1, +1, +2 deputizes for "value of basic size -2", value of basic size -1, etc.). Template 66 is for two ease measurements: add_e_hip_girth and add_e_waist_girth; these values will be calculated as percentage of the referring body measurements. The percentage value will be entered in the context of the referring table. Template 67 is for three styling measurements: p_waistband_width, p_skirt_length, and p_seam_extension. Template 68 is for the measurements for the pocket piece: p_pocket_width, p_pocket_length, and p_pocket_angle.

To define a table, the user specifies, in step 1.5.4 (block 44) a value for one of the sizes for each measurement identifier. The system calculates the values in the remaining sizes. The result is a measurement table. It is possible using a single template, for a user to create many tables by specifying different values for each measurement identifier in one size, with the system calculating values for the remaining sizes using the relationships as defined in the template. This will be described in more detail later.

Table 14 below gives an example of measurement tables 65A to 68A corresponding to the measurement templates of Table 13.

| Template body measurements women Table women, standard, tall | 36 | 38 | 40 | 42 | 44 | |
|---|---|---|---|---|---|---|
| bm_waist_to_knee | 623.00 | 624.00 | 625.00 | 626.00 | 627.00 | 65A |
| bm_waist_to_hip | 220.00 | 220.00 | 220.00 | 220.00 | 220.00 | |
| bm_waist_girth | 680.00 | 720.00 | 760.00 | 800.00 | 840.00 | |
| bm_hip_girth | 940.00 | 970.00 | 1000.00 | 1030.00 | 1060.00 | |

| Template ease women Table tight | 36 | 38 | 40 | 42 | 44 | |
|---|---|---|---|---|---|---|
| add_e_hip_girth | 47.00 | 48.50 | 50.00 | 51.50 | 53.00 | 66A |
| add_e_waist_girth | 13.60 | 14.40 | 15.20 | 16.00 | 16.80 | |

| Template styling women Table: slim skirt | 36 | 38 | 40 | 42 | 44 | |
|---|---|---|---|---|---|---|
| p_waistband_width | 30.00 | 30.00 | 30.00 | 30.00 | 30.00 | 67A |
| p_skirt_length | -600.00 | -610.00 | 620.00 | 630.00 | 640.00 | |
| p_seam_extension | 10.00 | 5.00 | 0.00 | -5.00 | -10.00 | |

| Template pocket styling women Table: flap pocket | 36 | 38 | 40 | 42 | 44 | |
|---|---|---|---|---|---|---|
| p_pocket_width | 10.00 | 10.00 | 10.00 | 10.00 | 10.00 | 68A |
| p_pocket_length | 70.00 | 70.00 | 70.00 | 80.00 | 80.00 | |
| p_pocket_angle | 0.00 | 0.00 | 0.00 | 0.00 | 0.00 | |

Table 14

The entries in the measurement tables are the actual values for the various measurements. The values in the basic size column have been entered by the user; the system has calculated the remaining values (for the sizes on either side of the basic size). In the cases of tables 65A, 67A, and 68A, this involved adding the values in the relevant entries in tables 65, 67, and 68 to the nominal values entered in tables 65A, 67A and 68A. In the case of table 66A, the user has entered the percentage values of 5% for add_e_hip_girth and 2% for add_e_waist_girth and the system calculates the referring values.

Both measurement tables and measurement templates, together with the dimensional piece descriptions are part of a generic pattern description 46. Such generic pattern descriptions are storable in the pattern knowledge database in electronic format in the database 28.

When generic pattern descriptions are available in the pattern knowledge base, the user then defines variable pattern specifications, step 2 (block 21). This process is shown in detail in Fig. 1C, and may consist of the full set or a subset of the following steps:

- defining the set of possible valid pieces (Block 51),
- defining the allowed valid groups of elements (Block 52),
- defining the set of allowable size ranges (Block 53),
- defining the allowable tables (Block 54), (e.g. shrinkage tables).
- defining valid combinations (Block 55), i.e. e.g. by selecting a certain size range, then only a subset of the allowed tables might be applicable. Or certain pieces might be available only for certain sizes, i.e. restrict the allowed size ranges.

At step 3.1 (block 60) the user selects a variable pattern description from the pattern knowledge base 35. From this variable pattern description, the user selects the pattern pieces (step 3.2, block 61) and element groups (step 3.3, block 62), that will be used for building a specific pattern. Then, at step 3.4 (block 63), the user decides in which sizes the pattern shall be produced. At step 3.5 (block 64), the user has to select the measurement tables and templates that describe the dimensions of the desired garments. Then from the variable pattern it is possible to choose an appropriate set of tables for the creation of a pattern specification ( Block 65) that can be processed by the system Once a pattern specification has been generated, it can be stored in electronic format in the database 28 to be available for future re-use (as for example for generation of markers).

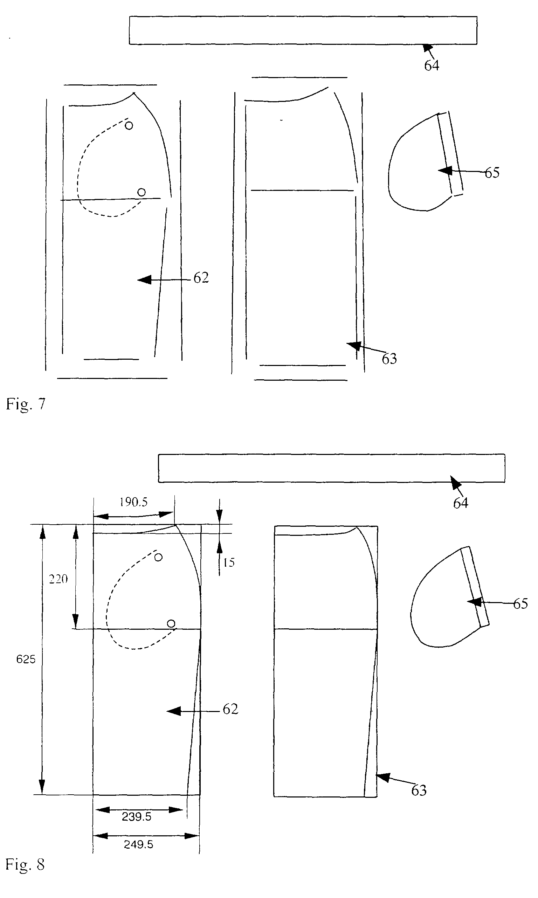

Fig. 5 shows an example of a generic pattern description including several variations. Fig. 7 shows one possible pattern specification, without defined associated constraints, containing the elements that belong to both, the selected pattern pieces (front panel piece 62, back panel piece 63, a waist band piece and a welt pocket piece 66) and the selected element groups (basic frame Fig. 6A, waist area without dart Fig. 6B, waistband Fig. 6D and welt pocket Fig. 6E)

In step 3 (block 22), the system processes the pattern specifications. This means that the system first has to evaluate, for each such size, the formulas on the measurements, using the values from the measurement tables, to obtain the numerical values for the constraints. Then the set of geometric elements with their current positions together and all their attached constraints are passed to a constraint solver subsystem. This subsystem calculates the correct positions of the geometric elements such that they satisfy all the constraints, if necessary taking the tolerances into account. For the present example, shown in Figure 8, the specified value of 190 for c_waist_width_fp (Fig. 3) has been raised to 190.5 in order to fulfil all constraints, whereas the values for hip width and bottom width needed to be reduced.

The constraint solvers implementation is based on techniques known in the state of the art (J.Owen: Algebraic Solution for Geometry from Dimensional Constraints, ACM Symp. Foundations of Solid Modelling, Austin, USA, 1991; W.Bouma, I.Fudos, C:Hoffmann, J.Cai, T.Paige:, A geometric constraint solver, Computer Aided Design, Vol.27, No. 6, 1995; and G.A.Kramer: A geometric constraint engine, Artificial Intelligence, 58 (1-3), 1993). These methods provide algorithms (using numerical and symbolic reasoning) for solving geometric constraint systems. They are proven to work for simple geometries like points, lines and circles together with basic constraints as distances, incidences, angles, tangencies, concentricities, collinearities and prescribed radii.

After solving a pattern with constraints on, the system may be adapted to display status information relating to the solving of the constraints. Typically these may include information with regard to whether:

1. A dimensional description is inconsistent if at least two constraints contradict each other. In this case there exists no solution for the constraint solving problem. This leads to an error status of the system and the user will have to redefine the constraints to make the dimensional description consistent.

2. A dimensional description of a piece is well-defined if the constraints match exactly the degrees of freedom of the geometric elements and there exists exactly one solution to the constraint solving problem. In this case the system will identify this unique solution.

3. A dimensional description is under-defined if there exist more then one solution to the constraint solving problem. In the worst case this can be infinitely many solutions. The system will select a solution which is as close as possible to the initial graphic.

4. A dimensional description is over-defined if more constraints are specified than needed. This means that at least one constraint is redundant. In this case the system eliminates the redundancy.

As a result, all the pieces of the pattern are produced in all the specified sizes (block 23). If the user dislikes the shape of the pieces the pattern has to be reengineered. This means that either the generic pattern description needs to be changed, by either changing the set of geometric elements or changing the constraints, or the pattern specification needs to be changed, e.g. by specifying new values in the measurement tables.

If the user approves the pattern, the pattern production is finished. The geometric shapes of the pattern pieces are stored in electronic format and are now available for further processes in the garment manufacturing, as e.g. marker making, cutting material, etc. (block 24).

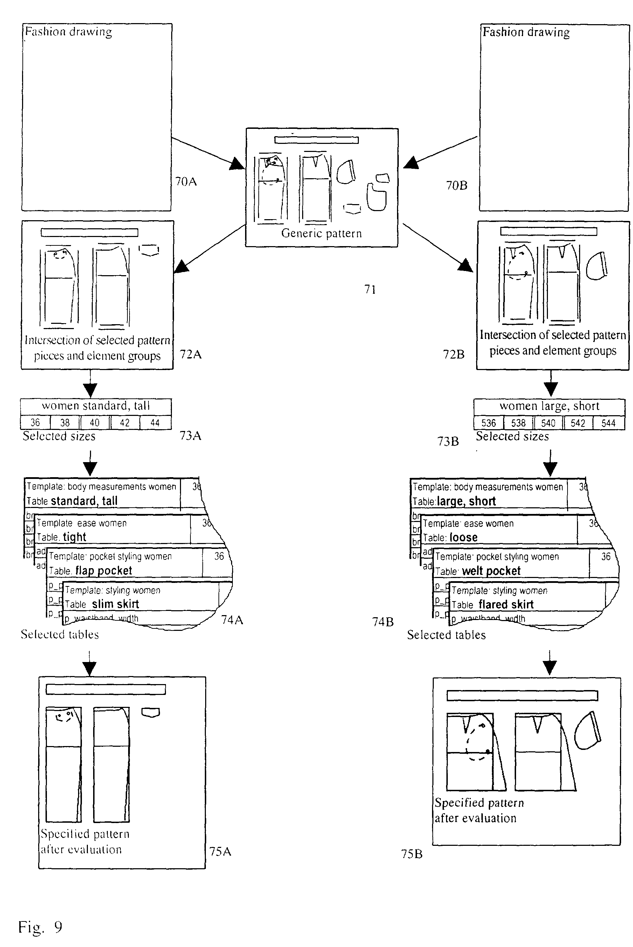

The flexibility of the system allows the user to easily create different variations of the same type of patterns. Fig. 9 shows how a slim skirt for a tall woman and a flared skirt for a large short woman can be derived from the same generic pattern description. These variations are obtained by using different sizes with different measurement tables with different pattern pieces and element groups based on the same dimensional piece description.

More specifically, the process starts with a fashion drawing 70A for a flap pocket skirt. The set of pattern pieces 72A is developed as described above with reference to Figs. 2 to 6. Next, the desired range of sizes is defined, as indicated at 73A, and the set of templates and then the associated set of tables are developed as indicated at 74A. From these, the system goes through blocks 22 and 23 to produce the finished pattern 75A, which can then be used for garment cutting.

Fig. 9 also shows the development of a welt pocket skirt (fashion drawing 70B). This skirt is similar to the flap pocket skirt 70A, differing primarily in the pocket and the different waist area (with dart). A common generic pattern 71 is therefore developed, sharing most of the pieces but including the two different pocket pieces and element groups for the two skirts. From this, the development processes for the two skirts separate again, involving the selection of a set of pattern pieces and element groups at 72B, the choice of the sizes 73B, the development of the templates and tables 74B, and the production of the finished patterns 75B.

It will of course be realised that some steps relating to the welt pocket skirt may simply be copied from the results already obtained in developing the flap pocket skirt. For example the generation of some of the templates may be copied across with some modification for the welt pocket skirt. For example, the final form of the welt pocket skirt is flared, The template for the skirt piece therefore requires modification, e.g. by increasing all horizontal dimensions in dependence on their vertical coordinate. It will be appreciated that the template for the welt pocket piece itself is completely independent of the template for the flap pocket piece for the flap pocket skirt.

The system can conveniently be implemented by means of suitably controlled microprocessor units and storage units of generally conventional types for performing the necessary logic and storage functions, a visual display unit and printer for producing transient and permanent displays, a mouse and a keyboard for data input and operator control, etc.

In summary, a pattern specification is generated for the pattern pieces of a garment and patterns for manufacture of the garment. The generation of the pattern specification involves making a freehand sketch (step 1, Fig. 2); entering geometric constraints with dimensions (step 1.2, Fig.3); converting the dimensions to variables and optionally, formulas (step 1.2, Fig. 4); assigning the elements to groups and pieces (step 1.3, Fig 5 and step 1.4, Fig. 6) setting up templates (step 1.5, Figs. 1B, Table 1); deriving tables (Table 2); checking for consistency (step 3); and storing the pattern specification (Figs. 5, 6) in a database (26). For manufacture, desired parameters, sizes, pattern pieces and elements groups are selected (step 2, Fig. 1C), the pattern is solved and displayed for approval (block 23), printed out for use for manufacture of the garment or sent to the next process stage (e.g. marker making, fabric cutting).

The pattern specification created using the system and method of the present invention allows a user to apply immediate changes to the dimensions of the garment, styling details of the garment, shaping details. It is possible to extract specific values from pattern geometries imported from other CAD systems and to enter these values in tables in order to reuse them for the definition of new patterns. Alternatively the tables and pattern geometries may be constructed from first principles.

It will be appreciated that the invention is applicable to any situation in which a wide variety of sizes, fittings or the like are required to be generated for articles of a common basic style, and accordingly there is herein described a garment pattern processing system and method which has distinct advantages over known systems. Although described herein with reference to specific examples it will be appreciated by the skilled person that the invention is to be limited only by reference to the appended claims.

## Claims

1. A system for the generation of a garment pattern sketch comprising:

   a) graphical definition means (Block 30) having a graphical user interface adapted to enable a user to define a desired graphic element, the graphic element forming a portion of a finished garment pattern,
   b) geometric definition means (Block 31) adapted to enable a user to define specific geometric features of the graphic element so as to form a geometric element,
   c) associating means (Block 32) for associating two or more geometric elements so as to form pattern pieces, and
   d) dimension definition means (Block 37) for defining measurement indices, the measurement indices being linkable to geometric features of the defined geometric elements and defining possible dimensions for the geometric elements, the dimensions being associated with desired pattern sizes.

2. The system as claimed in claim 1 wherein the dimension definition means defines a set of measurement indices, the set defining dimension ranges for the elements, the dimension ranges identifying possible sizes for a pattern.

3. The system as claimed in claim 1 or claim 2 wherein the dimension definition means comprises at least one measurement table the measurement table defining possible sizes for the geometric elements.

4. The system as claimed in claim 3 further comprising means for inter-relating the sizes of the measurement table (Block 43) the means for inter-relating defining the relationship between possible sizes of the measurement table (Block 45).

5. The system as claimed in any preceding claim wherein the geometric definition means are further adapted to define an inter-relationship (Block 31) between two or more geometric elements, and the dimension definition means are further adapted to be related to this inter-relationship.

6. The system as claimed in any preceding claim comprising means for assigning subsets of elements to element groups (Block 33) for defining styling details.

7. The system as claimed in any preceding claim, further comprising means for associating two or more pattern pieces or element groups so as to form a pattern type, the pattern type enabling a user to produce generic patterns, the variance of the pattern being selected from one or more of the following:

   a) the particular pattern piece selected,
   b) the particular pattern groups selected,

c) dimension definition means.

**8.** The system as claimed in claim 7 further comprising means for selecting specific pattern pieces, element groups, and/or possible dimensions from a generic pattern (Block 55), the selection chosen forming a variable pattern specification (Block 56).

**9.** A system for generating a pattern specification comprising

a) a system for generating a garment pattern sketch as claimed in any one of claims 1 to 8,
b) selection means (Block 22) for selecting specific pattern pieces, element groups, and/or possible dimensions from the variable pattern specification, and
c) processing means (Block 23) for processing the variable pattern in accordance with the defined geometric elements and measurement indices so as to form garment pattern data (Block 24).

**10.** The system as claimed in claim 9 wherein the processing means is adapted to process said pattern specification on the basis of geometric constraint solving algorithms.

**11.** A method for generating garment pattern sketches comprising the steps of:

a) defining (Block 30) a desired graphic element, the graphic element forming a portion of a finished garment pattern,
b) defining (Block 31) specific geometric features of the graphic element so as to form a geometric element,
c) associating (Block 32) two or more geometric elements so as to form pattern pieces, and
d) defining (Block 37) measurement indices, the measurement indices being linkable to geometric features of the defined geometric elements and defining possible dimensions for the geometric elements, the dimensions being associated with desired pattern sizes.

**12.** The method as claimed in claim 11 the definition of the measurement indices defines a set of measurement indices, the set defining dimension ranges for the elements, the dimension ranges identifying possible sizes for a pattern.

**13.** The method as claimed in any one of claims 11 to 12 wherein the measurement indices are defined within at least one measurement table (Block 45), the measurement table defining possible sizes for the geometric elements.

**14.** The method as claimed in claim 13 further comprising the step of inter-relating the sizes of the measurement table (Block 43), the inter-relating defining the relationship between possible sizes of the measurement table.

**15.** The method as claimed in any of claims 11 to 14 comprising the further step of defining an inter-relationship between two or more geometric elements, and optionally adapting the measurement indices to be related to this inter-relationship.

**16.** The method as claimed in any of claims 11 to 15 further comprising the step of assigning subsets (Block 33) of elements to element groups for defining styling details.

**17.** The method as claimed in any of claims 11 to 16 further comprising the step of associating two or more pattern pieces or element groups so as to form a pattern type, the pattern type enabling a user to produce generic patterns, the variance of the pattern being selected from one or more of the following:

a) the particular pattern pieces selected,
b) the particular pattern group selected, and/or
c) the defined possible dimensions.

**18.** The method as claimed in claim 17 further comprising the step of selecting specific pattern pieces, element groups and/or possible dimensions (Block 55) from a generic pattern, the selection forming a variable pattern specification.

**19.** A method of forming a pattern specification comprising the steps of

a) generating a garment pattern sketch as claimed in any one of claims 11 to 18,
b) selecting (Block 22) specific pattern pieces, element groups and/or dimensions from the variable pattern specification, and

c) processing (Block 23) the variable pattern in accordance with the defined geometric elements and measurement indices so as to form garment pattern data.

**20.** The method as claimed in claim 19 wherein the processing step (Block 23) is adapted to process said pattern specification on the basis of geometric constraint solving algorithms

**21.** The method as claimed in any one of claims 19 to 20 further comprising the step of enabling the garment manufacturer to modify the pattern pieces forming the pattern specification of step (b) of claim 19.

**22.** A database adapted to be used in the generation of garment pattern data, the database having:

a) a graphic piece storage area (Block 28) adapted to store a plurality of defined graphic elements with associated geometric features

b) a plurality of measurement tables (Block 45), the measurement tables defining a set of allowable sizes for specific garment patterns, and

c) a variable pattern specification storage area adapted to store variable pattern specifications.

**23.** The database as claimed in claim 22 further comprising:

a) a pattern specification storage area adapted to store a pattern specification

b) a production data storage are adapted to store data needed for further garment manufacturing, based on a processed pattern specification

**24.** A computer program for generating garment pattern data which when run on a computer is adapted to carry out the method steps of any one of claims 11 to 19.

Fig. 1

Fig. 1A

1.5.1 User defines measurement identifiers
40

1.5.2 User defines sizes
41

1.5.3 User defines relationships between the values of measurement identifiers for each size
42

Template
43

1.5.4 User defines measurement values
44

Generic pattern description
46

Table
45

Fig. 1B

Pattern knowledge base
35

2.1 User selects generic pattern specification
50

2.2 User sets pieces range
51

2.3 User sets element groups range
52

2.4 User sets size ranges
53

2.5 User sets valid tables
54

2.6 User defines valid combinations
55

Variable Pattern specification
56

Fig. 1C

```
┌─────────────────┐      ┌─────────────────────┐
│    Pattern      │      │  3.1  User selects  │
│ knowledge base  │──────│   variable pattern  │
│                 │      │     description     │
└─────────────────┘      └─────────────────────┘ 60
        35                          │
                                    ▼
                         ┌─────────────────────┐
                         │  3.2  User selects  │
                         │    pattern pieces   │
                         └─────────────────────┘ 61
                                    │
                                    ▼
                         ┌─────────────────────┐
                         │  3.3  User selects  │
                         │    element groups   │
                         └─────────────────────┘ 62
                                    │
                                    ▼
                         ┌─────────────────────┐
                         │  3.4  User selects  │
                         │        sizes        │
                         └─────────────────────┘ 63
                                    │
                                    ▼
                         ┌─────────────────────┐
                         │  3.5  User selects  │
                         │        tables       │
                         └─────────────────────┘ 64
                                    │
                                    ▼
                         ┌─────────────────────┐
                         │ Pattern specification│
                         └─────────────────────┘ 65
```

Fig. 1D

Fig. 2

Length
190 ·1

Distance
point to line
15 ·0

Parallel
Distance
220 ÷0

Parallel
Distance
625 ·1

60

62

Length
240 ·2

Distance
point to point
250 ·2

Fig. 3

c_waist_width_fp
1

p_waist_drop_fp
÷0

c_waist_
to_hip_
distance
0

c_hip_width_fp =
(bm_hip_width +
add_e_hip_width)/4
= 250

p_skirt_
length
1

c_waist_width_fp =
.....
= 190

c_bottom_width
_fp    2

c_hip_width_fp
2

Fig. 4

Fig. 5

EP 1 160 733 A1

Fig. 6A

Fig. 6B

Fig. 6C

Fig. 6D

Fig. 6E

Fig. 6F

Fig. 7

Fig. 8

Fashion drawing

Fashion drawing

70A

70B

Generic pattern

71

Intersection of selected pattern pieces and element groups

72A

Intersection of selected pattern pieces and element groups

72B

| women standard, tall | | | | |
|---|---|---|---|---|
| 36 | 38 | 40 | 42 | 44 |

Selected sizes

73A

73B

| women large, short | | | | |
|---|---|---|---|---|
| 536 | 538 | 540 | 542 | 544 |

Selected sizes

Template: body measurements women    36
Table **standard, tall**

Template: ease women    36
Table. **tight**

Template: pocket styling women    36
Table. **flap pocket**

Template: styling women
Table. **slim skirt**

p. waistband width

74A

Selected tables

Template: body measurements women    36
Table: **large, short**

Template: ease women    36
Table: **loose**

Template: pocket styling women    36
Table: **welt pocket**

Template: styling women
Table: **flared skirt**

p. waistband width

74B

Selected tables

Specified pattern after evaluation

75A

Specified pattern after evaluation

75B

Fig. 9

European Patent
Office

**EUROPEAN SEARCH REPORT**

Application Number

EP 00 65 0060

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | LIGHT R ET AL: "MODIFICATION OF GEOMETRIC MODELS THROUGH VARIATIONAL GEOMETRY" COMPUTER-AIDED DESIGN,GB,IPC BUSINESS PRESS, HAYWARDS HEATH, vol. 14, no. 4, 1 July 1982 (1982-07-01), pages 209-214, XP002064920 ISSN: 0010-4485 /* the whole document */ | 1-22 | G06T17/40 |
| Y | HINDS B K ET AL: "INTERACTIVE GARMENT DESIGN" VISUAL COMPUTER,DE,SPRINGER, BERLIN, vol. 6, no. 2, 1990, pages 53-61, XP000610788 ISSN: 0178-2789 * page 53, right-hand column - page 54, right-hand column * | 1-22 | |
| Y | GOSSARD D C ET AL: "REPRESENTING DIMENSIONS, TOLERANCES, AND FEATURES IN MCAE SYSTEMS" IEEE COMPUTER GRAPHICS AND APPLICATIONS,US,IEEE INC. NEW YORK, vol. 8, no. 2, 1 March 1988 (1988-03-01), pages 51-59, XP000578227 ISSN: 0272-1716 * page 52, right-hand column, line 30 - page 55, right-hand column * | 1-22 | TECHNICAL FIELDS SEARCHED (Int.Cl.7) G06T |
| Y | US 5 757 661 A (SURVILLE JEAN-MARC) 26 May 1998 (1998-05-26) * column 2, line 62 - column 3, line 65 * | 1-22 | |
| A | US 5 268 999 A (YOKOYAMA TERUMICHI) 7 December 1993 (1993-12-07) | | |
| A | US 5 999 186 A (JACKSON GEOFF) 7 December 1999 (1999-12-07) | | |

The present search report has been drawn up for all claims

| Place of search | Date of completion of the search | Examiner |
|---|---|---|
| THE HAGUE | 9 November 2000 | Perez Molina, E |

EPO FORM 1503 03.82 (P04C01)

**ANNEX TO THE EUROPEAN SEARCH REPORT
ON EUROPEAN PATENT APPLICATION NO.**  EP 00 65 0060

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2000

| Patent document cited in search report | | Publication date | Patent family member(s) | | Publication date |
|---|---|---|---|---|---|
| US 5757661 | A | 26-05-1998 | FR | 2707120 A | 06-01-1995 |
| | | | AU | 7189694 A | 24-01-1995 |
| | | | DE | 69410464 D | 25-06-1998 |
| | | | DE | 69410464 T | 17-09-1998 |
| | | | EP | 0706333 A | 17-04-1996 |
| | | | ES | 2119211 T | 01-10-1998 |
| | | | WO | 9501110 A | 12-01-1995 |
| | | | HK | 1010776 A | 25-06-1999 |
| | | | JP | 8511588 T | 03-12-1996 |
| US 5268999 | A | 07-12-1993 | JP | 63300362 A | 07-12-1988 |
| | | | JP | 1007171 A | 11-01-1989 |
| US 5999186 | A | 07-12-1999 | AU | 5920798 A | 11-12-1998 |
| | | | BR | 9809458 A | 20-06-2000 |
| | | | CN | 1269040 T | 04-10-2000 |
| | | | EP | 0909429 A | 21-04-1999 |
| | | | GB | 2330052 A | 07-04-1999 |
| | | | WO | 9853429 A | 26-11-1998 |

EPO FORM P0459

For more details about this annex : see Official Journal of the European Patent Office, No. 12/82